# EUROPÄISCHE PATENTANMELDUNG

(11) **EP 3 299 351 A1**
(43) Veröffentlichungstag der Anmeldung: **28.03.2018**
(21) Anmeldenummer: 16190559.1
(22) Anmeldetag: 26.09.2016
(51) Int. Cl.: C04B 28/00, C04B 28/06, C04B 28/26, C04B 40/06

(54) **ZWEIKOMPONENTEN-MÖRTELMASSE UND DEREN VERWENDUNG**

(71) Anmelder: HILTI Aktiengesellschaft, 9494 Schaan (LI)
(72) Erfinder: Kumru, Memet-Emin, 86199 Augsburg (DE)
(74) Vertreter: Hilti Aktiengesellschaft Corporate Intellectual Property

(57) **Zusammenfassung**

In ihrer allgemeinen Form umfasst die Erfindung eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) und/oder die Härterkomponente (B) als weiteren Bestandteil mindestens einen anorganischen Zusatzstoff enthält. Erfindungsgemäß liegt der anorganische Zusatzstoff in einem Anteil von mindestens 70 Gewichtsprozent vor, bezogen auf das Gesamtgewicht der Masse. Der anorganische Füllstoff umfasst mindestens Flugasche und Aluminatzement. Die Mörtelmasse weist geringen Polymerisationsschrumpf auf.

## Beschreibung

Die Erfindung betrifft eine Zweikomponenten-Mörtelmasse mit einer Harzkomponente (A), die wenigstens ein radikalisch härtbares Harz umfasst, und einer Härterkomponente (B) für das Harz der Harzkomponente (A). Gegenstand der Erfindung ist ferner die Verwendung der Mörtelmasse zur chemischen Befestigung von Bauteilen wie Ankergewindestangen, Bewehrungseisen, Gewindehülsen und Schrauben in Bohrlöchern, die in einen mineralischen Untergrund eingebracht sind.

Zur sicheren Befestigung von Bauteilen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Bauteile mit den entsprechenden Abmessungen in den mineralischen Untergrund gebohrt. Anschließend werden die Bohrlöcher von Bohrstaub befreit, und die Zweikomponenten-Mörtelmasse wird nach Vermischen der Harzkomponente mit der Härterkomponente in das Bohrloch eingebracht. Danach wird das zu befestigende Bauteil in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Bauteils im mineralischen Untergrund erreicht.

Das Tragverhalten der so befestigten Bauteile hängt von mehreren Einflussgrößen ab, die üblicherweise als interne und externe Größen klassifiziert werden. Zu den internen Einflussgrößen zählen die chemische Zusammensetzung der Mörtelmasse, ihr Herstellungsprozess und die Verpackung der Mörtelmasse, die typischerweise in zwei getrennten Behältern vorliegende Komponenten umfasst.

Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Aus der EP 0 432 087 und der EP 0 589 831 sind Zweikomponenten-Mörtelmassen auf der Grundlage von Urethan(meth)acrylatharzen bekannt, die durch radikalische Polymerisation aushärten.

Die im Stand der Technik bekannten und als chemische Verbunddübel eingesetzten Mörtelmassen auf der Grundlage von radikalisch härtenden Reaktionsharzen zeigen bereits gute Lastwerte in trockenen und feuchten Bohrlöchern. Allerdings führt der bei der Aushärtung der Reaktionsharze auftretende Polymerisationsschrumpf zu einer Abnahme des Mörtelvolumens. Dadurch kann es einer Leistungsabnahme des Verbunddübels kommen.

Gegenüber dem bekannten Stand der Technik besteht somit weiter Bedarf an Zweikomponenten-Mörtelmassen mit guter Haftung in Bohrlöchern, die einfach zu verarbeiten sind und die verbesserte mechanische Eigenschaften aufweisen.

Insbesondere besteht die Aufgabe, eine Mörtelmasse auf der Grundlage von radikalisch aushärtenden Reaktionsharzen bereitzustellen, die als chemischer Verbunddübel verwendet werden kann und die dauerhaft gute Lastwerte zeigt.

Es hat sich überraschenderweise gezeigt, dass diese Aufgabe durch eine Zweikomponenten-Mörtelmasse gemäß Anspruch 1 gelöst wird.

Bevorzugte Ausführungsformen der erfindungsgemäßen Mörtelmasse sind in den Unteransprüchen angegeben, die wahlweise miteinander kombiniert werden können.

Gegenstand der Erfindung ist ferner die Verwendung der Masse zur chemischen Befestigung von Bauteilen wie Ankergewindestangen, Bewehrungseisen, Gewindehülsen und Schrauben in Bohrlöchern, die in mineralischem Untergrund, vorzugsweise Beton, vorliegen.

In ihrer allgemeinen Form umfasst die Erfindung eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) und/oder die Härterkomponente (B) als weiteren Bestandteil mindestens einen anorganischen Zusatzstoff enthält. Erfindungsgemäß liegt der anorganische Zusatzstoff in einem Anteil von mindestens 70 Gewichtsprozent vor, bezogen auf das Gesamtgewicht der Masse.

Die Befestigung von Bauteilen unter Verwendung der erfindungsgemäßen Zweikomponenten-Mörtelmasse ergibt sowohl bei trockenen gereinigten Bohrlöchern als auch bei halbgereinigten und/oder feuchten Bohrlöchern hohe Lastwerte, die gegenüber niedriggefüllten Massen deutlich erhöht sind und außerdem über lange Zeit stabil bleiben. Ohne die Bindung an eine Theorie zu beabsichtigen, kann dieses Ergebnis mit einem zumindest teilweise verringerten molaren Anteil von Doppelbindungen in der Mörtelmasse, bezogen auf das Gewicht der Mörtelmasse, erklärt werden. Da weniger (Meth)Acrylatgruppen für die Polymerisation zur Verfügung stehen, ist auch die Volumenkontraktion in Folge der Polymerisationsreaktion verringert. Überraschend ist jedoch, dass sich auch die Lastwerte der hochgefüllten Zweikomponenten-Massen gegenüber solchen mit einem weit geringeren Füllstoffanteil nicht oder nicht wesentlich verschlechtern.

Unter einer "Zweikomponenten-Mörtelmasse" wird im Sinne der Erfindung eine Mörtelmasse verstanden, die aus einer härtbaren Harzkomponente und einer Härterkomponente für die Harzkomponente besteht, wobei die Harzkomponente und die Härterkomponente getrennt voneinander gelagert werden, sodass während der Lagerung keine Umsetzung der Härterkomponente mit der Harzkomponente erfolgt. Durch Vermischen der Härterkomponente mit dem Reaktivharz unmittelbar vor der Anwendung der Mörtelmasse wird die Aushärtung des Reaktivharzes gestartet.

Der Begriff "anorganischer Zusatzstoff" bezieht sich auf alle anorganischen Bestandteile der Mörtelmasse, außer Wasser.

Der Begriff "Flugasche" bezieht sich auf puzzolanische Zusatzstoffe, insbesondere die der Klasse der Alumosilikate. Im Rahmen der vorliegenden Erfindung bezieht sich Flugasche insbesondere auf den Zusatzstoff Microsit^{®}, wie Microsit^{®} H20 und Microsit^{®} H10 (Newchem, Switzerland).

Weitere Vorteile der Erfindung ergeben sich aus der folgenden Beschreibung bevorzugter Ausführungsformen mit Bezug auf die beigefügten Zeichnungen. In den Zeichnungen zeigen:
- Figur 1 ein Diagramm mit einer Darstellung der linearen Schwindung von gefüllten Mörtelmassen in Abhängigkeit vom Füllgrad;
- Figur 2 ein Diagramm mit einer Darstellung der aus einem Stahlhülsentest ermittelten Scherfestigkeit von Mörtelmassen in Abhängigkeit von der Hinterschnitttiefe der Stahlhülse.

Gemäß einer bevorzugten Ausführungsform liegt der anorganische Zusatzstoff in der Mörtelmasse in einem Anteil von 70 bis 85 Gewichtsprozent vor, bevorzugt von 70 bis 80 Gewichtsprozent, bezogen auf das Gesamtgewicht der Masse. Bei Anteilen des anorganischen Zusatzstoffs von über 85 Gewichtsprozent lassen sich die Massen nicht mehr sicher verarbeiten, da wegen der hohen Viskosität der hochgefüllten Massen keine homogene Vermischung mehr erreicht werden kann.

Bevorzugt ist der anorganische Zusatzstoff aus der aus anorganischen Füllstoffen, hydraulisch abbindenden oder polykondensierbaren anorganischen Verbindungen, Modifikatoren und Mischungen davon ausgewählt ist.

Besonders bevorzugt umfasst der anorganische Zusatzstoff einen Füllstoff, der in der Harzkomponente (A) und/oder in der Härterkomponente (B) enthalten sein kann. Beispiele für geeignete Füllstoffe sind Quarz, Glas, Korund, Porzellan, Steingut, Schwerspat, Leichtspat, Gips, Talkum und/oder Kreide sowie deren Mischungen in Form von Sanden, Mehlen oder Formkörpern, vorzugsweise in Form von Fasern oder Kugeln.

Gemäß einer besonders bevorzugten Ausführungsform umfasst der in der Mörtelmasse enthaltene Füllstoff mindestens Flugasche, insbesondere Steinkohlenflugasche, bevorzugt in einem Anteil von 5 bis 20 Gewichtsprozent, bezogen auf das Gesamtgewicht der Mörtelmasse, bevorzugt 5 bis 15 Gewichtsprozent. Flugasche weist besonders gute rheologische Eigenschaften auf und ermöglicht daher auch bei hohen Füllgraden noch eine hinreichende Mischbarkeit der Mörtelmasse. Es ist auch möglich den in der Mörtelmasse enthaltenen Füllstoff vollständig durch Flugasche zu ersetzen.

Gemäß einer weiter bevorzugten Ausführungsform der Erfindung umfasst der anorganische Zusatzstoff ferner eine hydraulisch abbindende oder polykondensierbare anorganische Verbindung, wie Zement und/oder Gips, vorzugsweise Eisenoxid-freien oder Eisenoxid-armen Zement wie Aluminat-Zement. Die hydraulisch abbindende oder polykondensierbare anorganische Verbindung ist vorzugsweise in der Härterkomponente (A) enthalten. Die Härterkomponente (B) umfasst in diesem Fall neben dem Härtungsmittel und dem für die Phlegmatisierung des Härtungsmittels wahlweise enthaltenen Wassers noch zusätzliches Wasser für das Aushärten der hydraulisch abbindenden oder polykondensierbaren anorganischen Verbindung.

Schließlich kann der anorganische Zusatzstoff in der Harzkomponente (A) und/oder in der Härterkomponente (B) noch weitere anorganische Modifikatoren wie Verdicker, Verflüssiger und Thixotropiermittel enthalten, beispielsweise gefällte oder pyrogene Kieselsäure, Bentonite und/oder Kaolin.

Das radikalisch härtbare Harz in der Komponente (A) der Mörtelmasse umfasst bevorzugt ein Urethan(meth)acrylatharz und/oder ein (meth)acrylatmodifiziertes Epoxidharz.

Zur Herstellung eines geeigneten Urethan(meth)acrylatharzes kann ein mindestens difunktionelles Isocyanat mit einer oder mehreren hydroxyfunktionellen, ethylenisch ungesättigten Verbindungen umgesetzt werden, insbesondere mit hydroxyfunktionellen (Meth)acrylverbindungen.

Das mindestens difunktionelle Isocyanat zur Herstellung des Urethan(meth)acrylatharzes kann ein aromatisches Isocyanat, ein aliphatisches Isocyanat, insbesondere ein cycloaliphatisches Isocyanat und ein Isocyanatgruppen enthaltendes Präpolymer sein, die auch im Gemisch miteinander eingesetzt werden können.

Beispiele für geeignete aliphatische und aromatische Isocyanate umfassen m-Phenylendiisocyanat, Toluylen-2-4-diisocyanat, Toluylen-2-6-diisocyanat, Hexamethylen-1,6-diisocyanat, Tetramethylen-1,4-diisocyanat, Cyclohexan-1,4-diisocyanat, Hexahydrotoluylendiisocyanat, Naphthylen-1,5-diisocyanat, Methoxyphenyl-2,4-diisocyanat, Diphenylmethan-4,4'-diisocyanat, 4,4'-biphenylendiisocyanat, 3,3'-Dimethoxy-4,4'-biphenyldiisocyanat, 3,3'-Dimethyl-4,4'-biphenyldiisocyanat, 3,3'-Dimethyldiphenylmethan-4,4'-diisocyanat, 4,4',4"-Triphenylmethantriisocyanat, Polymethylenpolyphenylisocyanat (PMDI), Toluylen-2,4,6-triisocyanat und 4,4'-Dimethyldiphenylmethan-2,2',5,5'-tetraisocyanat.

Diphenylmethan-4,4'-diisocyanat, Diphenylmethan-2,4'-diisocyanat und Mischungen davon werden gemeinsam als MDI bezeichnet, und alle können verwendet werden. Toluylen-2,4-diisocyanat, Toluylen-2,6-diisocyanat und Mischungen davon werden allgemein als TDI bezeichnet, und können ebenfalls alle verwendet werden.

Bevorzugt ist das Polyisocyanat aus der aus Diphenylmethandiisocyanat (MDI), polymerem Diphenylmethandiisocyanat (PMDI), Toluylendiisocyanat (TDI), Hexandiisocyanat (HDI), Isophorondiisocyanat (IPDI) und Mischungen davon bestehenden Gruppe ausgewählt.

Isocyanat-Präpolymere, die durch Reaktion eines stöchiometrischen Überschusses eines beliebigen Polyisocyanats mit einer isocyanatreaktiven Verbindung als Kettenverlängerer hergestellt werden, können ebenfalls verwendet werden, wahlweise im Gemisch mit den oben genannten aromatischen und aliphatischen Isocyanaten.

Beispiele für derartige Kettenverlängerer sind zweiwertige Alkohole wie Ethandiol, Diethylenglycol, Triethylenglycol und Polyethylenglycol, Propandiol, Dipropylenglycol, Tripropylenglycol und Polypropylenglycol, 1,4-Butandiol, 1,6-Hexandiol, Neopentylglycol und Diethanolamin, weiter aromatische Alkohole wie Bisphenol-A und Bisphenol-F oder deren Ethoxylierungsprodukte, Hydrierungsprodukte und/oder Halogenierungsprodukte, höherwertige Alkohole wie Glycerin, Trimethylolpropan, Hexantriol und Pentaerythrit, hydroxylgruppenhaltige Polyether wie beispielsweise Oligomere aliphatischer oder aromatischer Oxirane und/oder höherer cyclischer Ether, beispielsweise von Ethylenoxid, Propylenoxid, Styroloxid und Furan, Polyether, die in der Hauptkette aromatische Struktureinheiten enthalten, wie beispielsweise die Polyether des Bisphenol A und F, sowie hydroxylgruppenhaltige Polyester auf Basis der obengenannten Alkohole und Polyether mit Dicarbonsäuren oder ihrer Anhydride wie Adipinsäure, Phthalsäure, Tetra- oder Hexahydrophthalsäure, Hetsäure, Maleinsäure, Fumarsäure, Itaconsäure und Sebacinsäure.

Kettenverlängerer mit aromatischen Struktureinheiten dienen zur Kettenversteifung des Harzes. Hydroxylverbindungen mit ungesättigten Struktureinheiten wie Fumarsäure können zur Erhöhung der Vernetzungsdichte während der Aushärtung herangezogen werden. Verzweigte oder sternförmige Hydroxylverbindungen als Kettenverlängerer, insbesondere drei- und höherwertige Alkohole sowie Polyether und/oder Polyester, die deren Struktureinheiten enthalten, ergeben verzweigte oder sternförmige Urethan(meth)acrylate, die eine niedrigere Viskosität der Harze und eine verbesserte Löslichkeit in Reaktivverdünnern aufweisen.

Die hydroxyfunktionelle (Meth)acrylverbindung zur Herstellung des Urethan(meth)acrylatharzes der Harzkomponente (A) ist vorzugweise ein (Meth)acrylsäurehydroxyalkylester, wie Hydroxyethyl(meth)acrylat, Hydroxypropyl(meth)acrylat, Polyoxyethylen(meth)acrylat, Polyoxypropylen(meth)acrylat, oder ein hydroxylgruppenhaltiger (Meth)acrylsäureester von mehrwertigen Alkoholen wie Pentaerythrittri(meth)acrylat, Glyceroldi(meth)acrylat, Trimethylolpropandi(meth)acrylat und Neopentylglycolmono(meth)acrylat.

Die hier und im Folgenden verwendete Bezeichnung "(Meth)acryl..." oder "...(meth)acryl..." bedeutet, dass von dieser Bezeichnung sowohl die Acrylgruppe als auch die Methacrylgruppe umfasst sein soll.

Die Umsetzung des mindestens difunktionellen Isocyanats mit der hydroxyfunktionellen, ethylenisch ungesättigten Verbindung erfolgt derart, dass das so erhaltene radikalisch polymerisierbare Harz der Harzkomponente (A) im Wesentlichen frei von freien Isocyanatgruppen ist. Im Wesentlichen frei bedeutet hier, dass das Harz einen NCO-Gehalt von weniger als 2% aufweist, vorzugsweise weniger als 1% und besonders bevorzugt weniger als 0,3%. Dazu wird die hydroxyfunktionelle, ethylenisch ungesättigte Verbindung in einem stöchiometrischen Überschuss über die Isocyanatgruppen eingesetzt.

Als weitere radikalisch polymerisierbare Harze können beispielsweise Vinylester, Epoxy(meth)acrylate, ungesättigte Polyesterharze und Mischungen davon eingesetzt werden, allein oder auch zusammen mit dem oben beschriebenen (Poly)urethan(meth)acrylat.

Ungesättigte Polyesterharze werden durch Umsetzung von ungesättigten Dicarbonsäuren wie o- und/oder iso-Phthalsäure, Maleinsäure und Fumarsäure mit Dialkoholen erhalten.

Als Epoxy(meth)acrylate werden üblicherweise Kondensate von (Meth)acylsäure mit Glycidylethern von Bisphenol-A, Bisphenol-F oder Novolaken eingesetzt.

Das radikalisch polymerisierbare Harz liegt vorzugsweise in einem Anteil von 10 bis 35 Gewichtsprozent in der Mörtelmasse vor.

Gemäß einer bevorzugten Ausführungsform der Erfindung enthält die Harzkomponente (A) in allen oben beschriebenen Ausführungsformen als weiteren Bestandteil mindestens einen Reaktivverdünner, der wenigstens eine ethylenisch ungesättigte Gruppe aufweist. Geeignete Reaktivverdünner sind insbesondere (Meth)acrylatverbindungen sowie Allyl- und Vinylverbindungen.

Geeignete Reaktivverdünner sind in der EP 1 935 860 A1 und der DE 195 31 649 A1 beschrieben. Vorzugsweise enthält die Harzmischung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: Hydroxypropyl(meth)acrylat, 1,2-Ethandioldi-(meth)acrylat, 1,3-Propandioldi(meth)acrylat, 1,2-Butandioldi(meth)acrylat, 1,4-Butandioldi(meth)acrylat (BBDMA), Trimethylolpropantri(meth)acrylat, Phenethyl-(meth)acrylat, Tetrahydrofurfuryl(meth)acrylat, Ethyltriglykol(meth)acrylat, *N,N-*Dimethylaminoethyl(meth)acrylat, *N,N*-Dimethylaminomethyl(meth)acrylat, Acetoacetoxyethyl(meth)acrylat, Isobornyl(meth)acrylat, 2-Ethylhexyl(meth)-acrylat, Diethylenglykoldi(meth)acrylat, Methoxypolyethylenglykolmono-(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)-acrylat, Bisphenol-A-(meth)acrylat, Novolakepoxidi(meth)acrylat, Di-[(meth)acryloyl-maleoyl]-tricyclo-5.2.1.0.²⁶-decan, Dicyclopentenyloxyethylcrotonat, 3-(Meth)acryloyl-oxymethyl-tricylo-5.2.1.0.²⁶-decan, 3-(Meth)cyclopentadienyl(meth)acrylat, Isobornyl(meth)acrylat und Decalyl-2-(meth)acrylat; PEG-di(meth)acrylate, wie PEG200-di(meth)acrylat, Tetraethylenglykoldi(meth)acrylat, Solketal(meth)acrylat, Cyclohexyl(meth)acrylat, Phenoxyethyldi(meth)acrylat, Methoxyethyl(meth)acrylat, Tetrahydrofurfuryl(meth)acrylat, *tert-*Butyl(meth)acrylat und Norbornyl(meth)acrylat.

Grundsätzlich können auch andere übliche, radikalisch polymerisierbare Verbindungen, allein oder im Gemisch mit den (Meth)acrylsäureestern, eingesetzt werden, z. B. Styrol, α-Methylstyrol, alkylierte Styrole, wie *tert-*Butylstyrol, Divinylbenzol und Allylverbindungen, wobei die nicht kennzeichnungspflichtigen Vertreter davon bevorzugt sind.

Besonders bevorzugte Reaktivverdünner sind Hydroxypropyl(meth)acrylat, 1,4-Butandioldi(meth)acrylat und Butandiol-1,2-di(meth)acrylat.

Der Reaktionsverdünner dient zum einen als Lösungsmittel für das radikalisch polymerisierbare Harz und zum anderen als ein Comonomer, das an der radikalischen Polymerisation der Harzkomponente teilnimmt. Die Verwendung von Reaktionsverdünnern führt zu einer weiteren Verbesserung der Haftung der ausgehärteten Mörtelmasse an den Oberflächen des mineralischen Untergrunds und/oder des zu befestigenden Bauteils.

Der Reaktivverdünner liegt in der Mörtelmasse bevorzugt in einem Anteil von 0 bis 25 Gewichtsprozent vor, weiter bevorzugt von 4 bis 25 Gewichtsprozent und besonders bevorzugt von 8 bis 15 Gewichtsprozent. Alle radikalisch polymerisierbaren Verbindungen liegen in der Mörtelmasse bevorzugt in einem Anteil von bis zu höchstens 30 Gewichtsprozent vor.

Gemäß einer weiter bevorzugten Ausführungsform der Erfindung enthält die Harzkomponente (A) wenigstens einen Beschleuniger für das Härtungsmittel. Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, *tert*-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxyethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Geeignete Metallsalze sind zum Beispiel Cobaltoctoat oder Cobaltnaphthenoat sowie Vanadium-, Kalium-, Kalzium-, Kupfer-, Mangan- oder Zirkoniumcarboxylate.

Die Harzmischung kann ferner einen Co-Beschleuniger enthalten, insbesondere, wenn eine Übergangsmetallverbindung als Beschleuniger verwendet wird. Abhängig von der gewählten Übergangsmetallverbindung ist der Fachmann in der Lage, einen geeigneten Co-Beschleuniger auszuwählen, um die gewünschten Aushärteeigenschaften zu erreichen. Wird eine Kobaltverbindung als Beschleuniger verwendet, ist der Co-Beschleuniger bevorzugt ein Amin und/oder eine 1,3-Dioxoverbindung. Wird eine Kupferverbindung als Beschleuniger verwendet, ist der Co-Beschleuniger bevorzugt ein Amin, ein Acetoacetamid, ein Kaliumsalz, ein Imidazol und/oder ein Gallat oder Gemische davon. Wird eine Manganverbindung als Beschleuniger verwendet, ist der Co-Beschleuniger bevorzugt eine 1,3-Dioxoverbindung, ein Thiol und/oder ein Kalium- oder Lithiumsalz oder Gemische davon. Wird eine Eisenverbindung als Beschleuniger verwendet, ist der Co-Beschleuniger bevorzugt eine 1,3-Dioxoverbindung und/oder ein Thiol, bevorzugt in Kombination mit einem Alkalimetallsalz. Geeignete 1,3-Dioxoverbindungen sind Acetylaceton, Acetoacetate und Acetoacetamide.

Die Beschleuniger und/oder Co-Beschleuniger sind vorzugsweise in einem Anteil von 0 bis 1 Gewichtsprozent, bevorzugt 0,01 - 0,7 Gew.-%, in der Mörtelmasse enthalten.

Weiterhin kann die Harzkomponente (A) einen oder mehrere der üblichen Polymerisationsinhibitoren zur Stabilisierung der Harzmischungen gegen vorzeitige Polymerisation und zur Einstellung der Gelzeit enthalten, vorzugsweisen in einem Anteil von 0 bis 0,2 Gewichtsprozent, bezogen auf das Gesamtgewicht der Mörtelmasse. Als Polymerisationsinhibitoren sind die für radikalisch polymerisierbare Verbindungen üblicherweise verwendeten Polymerisationsinhibitoren geeignet, wie sie dem Fachmann bekannt sind.

Beispiele für derartige Polymerisationsinhibitoren sind insbesondere Hydrochinon, substituierte Hydrochinone, z.B. 4-Methoxyphenol, Phenothiazin, Benzochinon oder *tert*-Butylbrenzkatechin, wie sie beispielsweise in der EP 1935860 A1 oder EP 0965619 A1 beschrieben werden, Nitroxylverbindungen, insbesondere stabile Nitroxylradikale, auch N-Oxyl-Radikale genannt, wie Piperidinyl-N-oxyl oder Tetrahydropyrrol-N-oxyl, wie sie in der DE 19531649 A1 beschrieben sind. Besonders bevorzugt wird 4-Hydroxy-2,2,6,6-tetramethylpiperidin-N-oxyl (im Folgenden als Tempol bezeichnet) zur Stabilisierung verwendet.

Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Polymerisationsinhibitoren, die oft Bestandteil von kommerziellen radikalisch härtenden Reaktionsharzen sind, kommen Phenole, wie 2-Methoxyphenol, 4-Methoxyphenol, 2,6-Di-*tert*-butyl-4-methylphenol, 2,4-Di-*tert*-butylphenol, 2,6-Di-*tert*-butylphenol, 2,4,6-Trimethylphenol, 2,4,6-Tris(dimethylaminomethyl)phenol, 4,4'-Thio-bis(3-methyl-6-*tert*-butylphenol), 4,4'-Isopropylidendiphenol, 6,6'-Di-*tert*-butyl-4,4'-bis(2,6-di-*tert*-butylphenol), 1,3,5-Trimethyl-2,4,6-tris(3,5-di-*tert*-butyl-4-hydroxybenzyl)benzol, 2,2'-Methylen-di-*p-*cresol, Brenzkatechin und Butylbrenzkatechine, wie 4-*tert*-Butylbrenzkatechin, 4,6-Di-*tert*-butylbrenzkatechin, Hydrochinone, wie Hydrochinon, 2-Methylhydrochinon, 2-*tert*-Butylhydrochinon, 2,5-Di-*tert*-butylhydrochinon, 2,6-Di-*tert*-butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und *N*-Oxyl-Radikale in Betracht.

Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE199 56 509 beschrieben sind. Ferner sind geeignete *N*-Oxylverbindungen Oxime, wie Acetaldoxim, Acetonoxim, Methylethylketoxim, Salicyloxim, Benzoxim, Glyoxime, Dimethylglyoxim, Aceton-*O*-(benzyloxycarbonyl)oxim und dergleichen. Ferner können in para-Position zur Hydroxylgruppe substituierte Pyrimidinol- oder Pyridinol-Verbindungen als Polymerisationsinhibitoren verwendet werden, wie sie in der DE 10 2011 077 248 B1 beschrieben sind.

Die Polymerisationsinhibitoren können, abhängig von den gewünschten Eigenschaften und der Verwendung der Harzmischung, entweder alleine oder als Kombination von zweien oder mehreren davon verwendet werden. Die Kombination der phenolischen und der nicht-phenolischen Polymerisationsinhibitoren ermöglicht dabei einen synergistischen Effekt, wie auch die Einstellung einer im Wesentlichen driftfreien Einstellung der Gelierzeit der Reaktionsharzformulierung zeigt.

Schließlich kann die Mörtelmasse noch weitere organische Zusätze wie Haftverbesserer auf der Grundlage von Silanverbindungen enthalten, wie sie dem Fachmann beispielsweise aus der EP 2 371 782 A2 und der WO 2011/072789 A1 bekannt sind.

Das in der Härterkomponente (B) der erfindungsgemäßen Zweikomponenten-Mörtelmasse enthaltene Härtungsmittel für das radikalisch polymerisierbare Harz der Harzkomponente (A) umfasst vorzugsweise mindestens ein organisches Peroxid, beispielsweise Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat.

Die organischen Peroxide sind vorzugsweise phlegmatisiert, insbesondere durch Zusatz von Wasser als Phlegmatisierungsmittel und/oder Lösungsmittel. Geeignete Härterkomponenten sind dem Fachmann bekannt und auf dem Markt erhältlich.

Zur Einstellung einer geeigneten Viskosität kann die Härterkomponente einen Anteil an anorganischen Füllstoffen und Modifikatoren wie Thixotropiermittel enthalten.

Die erfindungsgemäße Zweikomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Harzkomponente (A) und die Härterkomponente (B) der Mörtelmasse reaktionsinhibierend voneinander getrennt angeordnet sind.

Die erfindungsgemäßen Zweikomponenten-Mörtelmassen können vorteilhaft die nachfolgende Gesamtzusammensetzung aus Harzkomponente (A) und Härterkomponente (B) aufweisen: radikalisch härtbares Harz in einem Anteil von 4,5 bis 28,5 Gew.-%; Reaktivverdünner in einem Anteil von 0 bis 25 Gew.-%; organisches Peroxid in einem Anteil von 0,5 bis 5 Gew.-%; Polymerisationsbeschleuniger in einem Anteil von 0 bis 1,0 Gew.-%; Polymerisationsinhibitoren in einem Anteil von 0 bis 0,2 Gew.-%; anorganische Zusatzstoffe in einem Anteil von 70 bis 85 Gew.%; und Wasser in einem Anteil von 1 bis 10 Gew.%. Die Summe aller Anteile der Masse ergibt 100 Gewichtsprozent.

Bevorzugt ist die erfindungsgemäße Mörtelmasse zusammengesetzt aus:
4,5 - 28,5 Gew.-% radikalisch härtbares Harz;
0 - 25 Gew.-% Reaktivverdünner;
0,5 - 5 Gew.-% organisches Peroxid;
0 - 1,0 Gew.-% Beschleuniger;
0 - 0,2 Gew.-% Inhibitoren;
0 - 5,0 Gew.-% Thixotropiermittel;
10 - 35 Gew.-% hydraulisch abbindendes bzw. polykondensierbares Material;
30-55 Gew.-% anorganische Füllstoffe; und
1- 10 Gew.-% Wasser,
wobei die Gesamtmenge der Thixotropiermittel, des hydraulisch abbindenden oder polykondensierbaren Materials und der anorganischen Füllstoffe von 70 bis 80 Gew.-% beträgt, jeweils bezogen auf das Gesamtgewicht der Mörtelmasse.

Bevorzugt enthalten die anorganischen Zusatzstoffe Flugasche in einem Anteil von 5 bis 20 Gewichtsprozent, bezogen aus das Gesamtgewicht Gewicht der anorganischen Zusatzstoffe.

Zur bestimmungsgemäßen Anwendung werden die Harzkomponente (A) und die Härterkomponente (B) aus den getrennten Kammern entleert und in einer geeigneten Vorrichtung, beispielsweise einem Statikmischer, gemischt. Die Mischung aus Harzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Das Härtungsmittel der Härterkomponente (B) initiiert die radikalische Polymerisation der Harzkomponente (A), sodass die Mörtelmasse unter Umgebungsbedingungen innerhalb weniger Stunden aushärtet.

Gegenstand der Erfindung ist daher auch die Verwendung der erfindungsgemäßen Zweikomponenten-Mörtelmasse zur chemischen Befestigung von Bauteilen, insbesondere Ankergewindestangen, Bewehrungseisen, Gewindehülsen und Schrauben, in Bohrlöchern, die in einem mineralischen Untergrund, vorzugsweise Beton, vorliegen.

Die Erfindung wird nachfolgend anhand von bevorzugten Ausführungsbeispielen beschrieben, die jedoch keiner Weise einschränkend zu verstehen sind.

### Beispiele 1 bis 4

### Zweikomponenten-Mörtelmasse auf Basis eines Urethanmethacrylatharzes

Man bereitet zunächst die Harzkomponente (A) einer Zweikomponenten-Mörtelmasse dadurch, dass man 34,5 g einer Urethanmethacrylatharzmischung vorlegt und 2,8 g einer hydrophoben pyrogenen Kieselsäure als Thixotropiermittel zugibt und vermischt. Danach werden 44,2 g eines Quarzsandes und 18,5 g eines Aluminat-Zements zugegeben und im Speedmixer (Speedmixer DAC 800FVZ von Hauschild, Speedmixer Prog.2, 10 Sek. bei 1000 U/min, 20 Sek. bei 2500 U/min. und 15 Sek. bei 1500 U/min) zu einer luftblasenfreien pastösen Masse homogenisiert. Die auf diese Weise erhaltenen Harzkomponenten (A) werden jeweils in eine Kartusche eingebracht.

Als Härterkomponente (B) der Zweikomponenten-Mörtelmasse verwendet man eine wässrige Benzoylperoxidsuspension mit einem Feststoffanteil von 35 Gew.-%, in dem 64 Gew.-% Füllstoff in Form von Quarzmehl, 1 Gew.-% pyrogene Kieselsäure und 35 Gew.-% Benzoylperoxid enthalten sind. Der Anteil an Benzoylperoxid in der Härterkomponente (B) liegt somit bei 12,25 Gew.-% und der Wasseranteil bei 22,75 Gew.-%, bezogen auf das Gewicht der Härterkomponente (B). Die Härterkomponente (B) wird in eine zweite Kartusche eingefüllt.

Das Verhältnis der Harzkomponente (A) zur Härterkomponente (B) wurde so eingestellt, dass sich ein Gewichtsverhältnis von Acrylatharz zu Benzoylperoxid von etwa 13,5 : 1 ergab.

Auf die gleiche Weise wurden Mörtelmassen mit höherem Füllgrad hergestellt, wobei jeweils etwa 5 g, 10 g und 15 g der Urethanmethacrylatharzmischung in der Harzkomponente (A) durch die entsprechende Menge Flugasche ersetzt wurden.

Zur Anwendung als chemische Mörtelmasse zur Befestigung von Bauteilen werden die Harzkomponente (A) und die Härterkomponente (B) aus den Kartuschen ausgepresst und durch einen Statikmischer geführt oder in einem Dissolver oder Speedmixer (Speedmixer DAC 800FVZ von Hauschild, Speedmixer Prog.1, 1000 U/min) gemischt, wodurch die Reaktion dieser Komponenten unter Aushärtung des Reaktionsharzes und wahlweise des Zements einsetzt. Die reagierende Masse wird in das Bohrloch eingespritzt, worauf das zu befestigende Bauteil eingeführt und justiert wird.

Die Zusammensetzung der durch Mischen der Harzkomponente (A) und der Härterkomponente (B) erhaltenen Mörtelmassen ist in der folgenden Tabelle 1 angegeben.

**Tabelle 1: Zusammensetzung der Mörtelmassen**

| | Beispiel 1 (Vergleich) | Beispiel 2 | Beispiel 3 | Beispiel 4 |
|---|---|---|---|---|
| Komponenten | [Gew.-%] | [Gew.-%] | [Gew.-%] | [Gew.-%] |
| Urethan methacrylatharz | 10,6 | 9,1 | 7,6 | 6,0 |
| Reaktivverdünner | 17,2 | 14,6 | 12,2 | 9,7 |
| Beschleuniger | 0,7 | 0,6 | 0,5 | 0,4 |
| Inhibitoren | 0,1 | 0,1 | 0,1 | 0,1 |
| Quarzmehl | 47,6 | 47,1 | 46,7 | 46,1 |
| Aluminat-Zement | 15,3 | 15,8 | 16,2 | 16,7 |
| Flugasche | 0 | 5,5 | 11,1 | 16,6 |
| Pyrogene Kieselsäure | 2,5 | 2,1 | 1,3 | 1,0 |
| Benzoylperoxid | 2,1 | 1,8 | 1,5 | 1,2 |
| Wasser | 3,9 | 3,3 | 2,8 | 2,2 |
| | | | | |
| Summe % | 100 | 100 | 100 | 100 |

### Beispiel 5

### Bestimmung von Schwindungsverhalten und Viskosität

Das Schwindungsverhalten der Mörtelmassen gemäß den Beispielen 1 bis 4 wird durch Messung der linearen Dickenänderung eines Mörtelbetts mittels eines Laserstrahls beim Aushärten bestimmt. Zur Durchführung der Messung werden 2,5 g der gemischten Mörtelmasse mit einem Spatel auf eine Stahlplatte aufgebracht, die links und rechts von 2,5 mm hohen Abstandshaltern begrenzt ist. Auf den Mörtel wird ein 0,5 mm dickes Stahlplättchen als Reflektor aufgelegt. Mit einer weiteren Stahlplatte wird der Mörtel mitsamt der Reflektorplatte auf eine Höhe von 2,5 mm plattgedrückt. Die Mörtelhöhe beträgt somit genau 2 mm. Für die Messung wird die obere Stahlplatte wieder entfernt, und die Dickenänderung des Mörtelbetts während der Aushärtung wird durch Reflexion eines Laserstrahls an der Reflektorplatte bestimmt.

Die so ermittelten Messwerte für die lineare Schwindung des Mörtelbetts sind in Tabelle 2 als Prozentwerte bezogen auf die Anfangsdicke des Mörtelbetts angegeben.

Die Viskosität der Harzkomponente (A) wurde bei 25°C mit einem Platte/Platte Messsystem mit 20 mm Durchmesser bei 0,5 1/sec und einem Spalt von 3mm auf einem Messgerät Kinexus der Fa. Malvern bestimmt. Eine Teflonscheibe verhindert das Austreten der Harzkomponente aus dem Spalt. Die ermittelten Messwerte sind ebenfalls in Tabelle 2 angegeben.

**Tabelle 2: Schwindungsverhalten der Mörtelmassen**

| | Füllgrad | Lineare Schwindung | Viskosität Harzkomponente (A) |
|---|---|---|---|
| | [%] | [%] | [Pa.sec] |
| Beispiel 1 (Vergleich) | 65,4 | 3,7 | 542,8 |
| Beispiel 2 | 70,5 | 2,6 | 1018,0 |
| Beispiel 3 | 75,4 | 2,4 | 1096,7 |
| Beispiel 4 | 80,4 | 1,4 | 2375,0 |

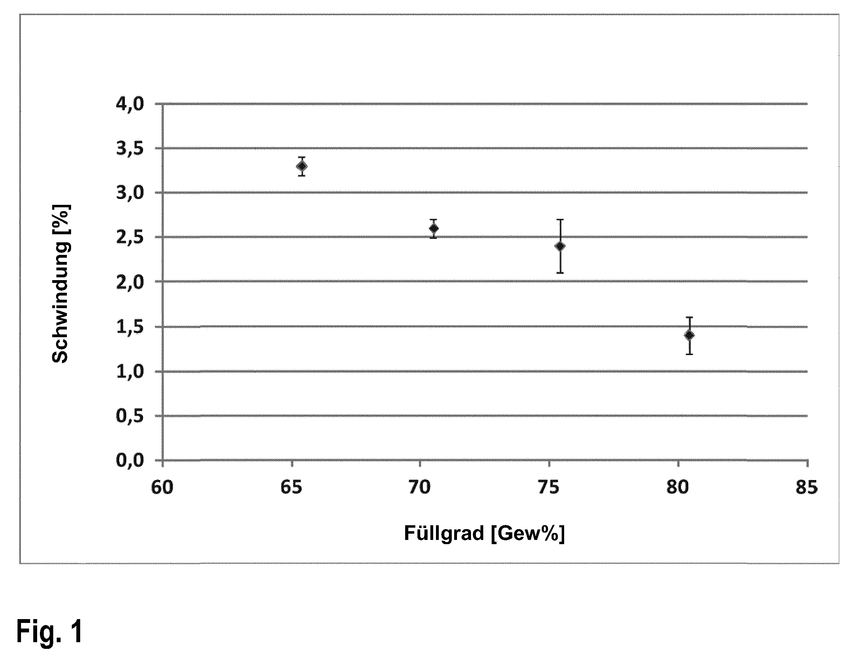

In Fig. 1 sind die Ergebnisse der Messung der linearen Schwindung der Mörtelmassen gemäß den Beispielen 1 bis 4 in Abhängigkeit vom Füllgrad der Mörtelmassen dargestellt. Wie zu erkennen ist, ergibt sich eine nahezu lineare Abhängigkeit des Schwindungsverhaltens vom Füllgrad der Mörtelmassen. Das Erhöhen des Füllgrades der Mörtelmassen durch Zusatz von Flugasche führt zu einem starken Anstieg der Viskosität der Mörtelmassen. In Abhängigkeit von jeweils verwendeten anorganischen Zusatzstoffen ist daher zu erwarten, dass ab einem Anteil der anorganischen Zusatzstoffe von etwa 85 Gewichtsprozent keine sichere Verarbeitung der Mörtelmassen mehr gewährleistet ist.

### Beispiel 6

### Bestimmung der Scherfestigkeit (Verbundspannung)

Zur Bestimmung der mit Zweikomponenten-Mörtelmassen gemäß den Beispielen 1 bis 4 erzielten Scherfestigkeit oder Verbundspannung wird der gemischte Mörtel in eine Stahlhülse mit definierter Geometrie und definierter Füllhöhe des Mörtels (Einbindetiefe) eingebracht, Anschließend wird eine Ankerstange mittels einer Zentrierhilfe mittig in der mit Mörtel gefüllten Stahlhülse platziert. Nach Aushärtung des Mörtels bei Raumtemperatur und für mindestens 12 Stunden wird die Probe mit Hilfe eines Gewindeadapters in eine Zugprüfmaschine eingeschraubt (Fabrikat: Zwick Roell Z050, 50 kN). Die Probe wird mit Zugkraft bei definierter Geschwindigkeit bis zum Versagen belastet. Die entsprechende Kraft-Weg-Abhängigkeit wird kontinuierlich registriert. Es werden jeweils fünf Einzelmessungen durchgeführt und der Mittelwert der maximalen Kraft beim Versagen berechnet.

Zur Durchführung der Messungen wurden Ankerstangen mit Gewinde M8 und Stahlhülsen mit folgender Geometrie verwendet:

| | |
|---|---|
| Hinterschnitttiefe: | 0,35+/-0,02 mm |
| Hinterschnittbreite: | 2 mm |
| Einbindetiefe: | 36 mm |
| Innendurchmesser: | 12 mm |

Die aus diesen Messungen ermittelte Scherfestigkeit ist definiert als der Quotient aus maximaler Kraft beim Versagen und der Scherfläche der verwendeten Ankerstange (Ankerstange M8: 904,3 mm²).

Die unter Verwendung der Mörtelmassen mit Harzzusammensetzungen gemäß den Beispielen 1 bis 4 erhaltenen Scherfestigkeiten sind in der nachfolgenden Tabelle 2 zusammengestellt:

**Tabelle 2: Verbundspannung der Mörtelmassen**

| | Füllgrad Gew.-% | Scherfestigkeit [N/mm²] |
|---|---|---|
| Beispiel 1 | 65,4 | 28,08 |
| Beispiel 2 | 70,5 | 28,49 |
| Beispiel 3 | 75,4 | 30,48 |
| Beispiel 4 | 80,4 | 29,01 |

Wie aus den in Tabelle 3 dargestellten Ergebnissen zu erkennen ist, zeigen die erfindungsgemäßen Zweikomponenten-Mörtelmasse gegenüber der Referenzmasse gemäß Beispiel 1 trotz eines höheren Füllgrades keine Verschlechterung der Lastwerte für die Haftung der Ankerstangen im Stahlhülsentest.

Die oben beschriebenen Messungen wurden mit Mörtelmassen der Beispiele 1 und 4 wiederholt, wobei die Hinterschnitttiefe der Stahlhülsen zwischen 25 µm und 350 µm bei einem Ringspalt von 3 mm (Innendurchmesser von Hülsen: 14 mm) variiert wurden.

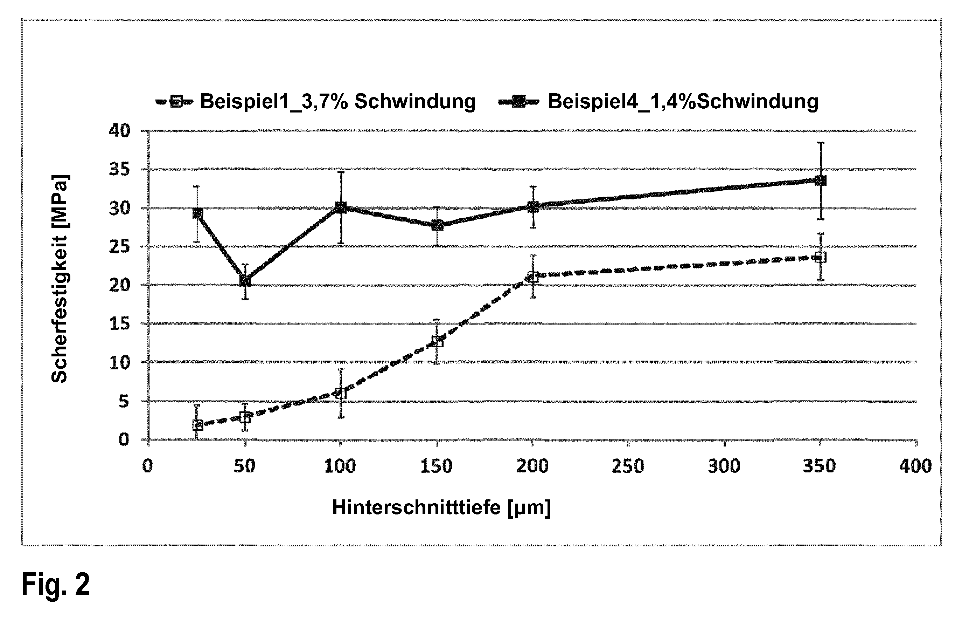

In Fig. 2 ist die Abhängigkeit der Scherfestigkeit von der Hinterschnitttiefe der Ankerstange für die Referenzmasse gemäß Beispiel 1 und die hochgefüllte Zweikomponenten-Mörtelmasse gemäß Beispiel 4 dargestellt. Zu erkennen ist, dass die Mörtelmasse gemäß Beispiel 4 aufgrund der geringeren Schwindung für alle getesteten Hinterschnitttiefen eine im Wesentlichen gleichbleibende Scherfestigkeit ergibt, während die Referenzmasse gemäß Beispiel 1 bei einer glatteren Oberfläche mit niedriger Hinterschnitttiefe leichter versagt und erst bei rauen Oberflächen mit Hinterschnitttiefen ab 200 µm eine hinreichende Scherfestigkeit aufweist.

## Patentansprüche

1. Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) und/oder die Härterkomponente (B) als weiteren Bestandteil mindestens einen anorganischen Zusatzstoff enthält, **dadurch gekennzeichnet, dass** der anorganische Zusatzstoff in einem Anteil von mindestens 70 Gewichtsprozent vorliegt, bezogen auf das Gesamtgewicht der Masse.

2. Mörtelmasse nach Anspruch 1, **dadurch gekennzeichnet, dass** der anorganische Zusatzstoff in einem Anteil von 70 bis 85 Gewichtsprozent vorliegt, bevorzugt von 70 bis 80 Gewichtsprozent, bezogen auf das Gesamtgewicht der Masse.

3. Mörtelmasse nach Anspruch 1 oder 2, **dadurch gekennzeichnet, dass** der anorganische Zusatzstoff aus der aus anorganischen Füllstoffen, hydraulisch abbindenden oder polykondensierbaren anorganische Verbindungen, Modifikatoren und Mischungen davon ausgewählt ist.

4. Mörtelmasse nach einem der vorangehenden Ansprüche, **dadurch gekennzeichnet, dass** der anorganische Zusatzstoff einen Füllstoff umfasst, der aus der aus Quarz, Glas, Korund, Porzellan, Steingut, Schwerspat, Leichtspat, Gips, Talkum, Kreide sowie deren Mischungen bestehenden Gruppe ausgewählt ist.

5. Mörtelmasse nach einem der vorangehenden Ansprüche, **dadurch gekennzeichnet, dass** der anorganische Zusatzstoff eine hydraulisch abbindende oder polykondensierbare anorganische Verbindung umfasst, die aus der aus Zement und Gips sowie Mischungen davon bestehenden Gruppe ausgewählt ist, vorzugsweise ein Aluminat-Zement ist.

6. Mörtelmasse nach einem der vorangehenden Ansprüche, **dadurch gekennzeichnet, dass** der anorganische Zusatzstoff einen Modifikator umfasst, der aus der aus Verdickern, Verflüssigern, Thixotropiermittel und Mischungen davon bestehenden Gruppe ausgewählt ist, bevorzugt gefällte oder pyrogene Kieselsäure, Bentonite und/oder Kaolin.

7. Mörtelmasse nach einem der vorangehenden Ansprüche, **dadurch gekennzeichnet, dass** der anorganische Füllstoff mindestens Flugasche umfasst, bevorzugt in einem Anteil von 5 bis 15 Gewichtsprozent, bezogen auf das Gesamtgewicht der Mörtelmasse.

8. Mörtelmasse nach einem der vorangehenden Ansprüche, **dadurch gekennzeichnet, dass** das radikalisch härtbare Harz ein Urethan(meth)acrylatharz umfasst.

9. Mörtelmasse nach einem der vorangehenden Ansprüche, **dadurch gekennzeichnet, dass** die Harzkomponente (A) als weiteren Bestandteil mindestens einen Reaktivverdünner enthält.

10. Mörtelmasse nach einem der vorangehenden Ansprüche, **dadurch gekennzeichnet, dass** die Harzkomponente (A) als weiteren Bestandteil mindestens einen Beschleuniger umfasst.

11. Mörtelmasse nach einem der vorangehenden Ansprüche, **dadurch gekennzeichnet, dass** die Härterkomponente (B) als Härtungsmittel mindestens ein organisches Peroxid, insbesondere Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat enthält.

12. Mörtelmasse nach einem der vorangehenden Ansprüche, **dadurch gekennzeichnet, dass** die Mörtelmasse zusammengesetzt ist aus:
dem radikalisch härtbaren Harz in einem Anteil von 4,5 bis 28,5 Gew.-%;
wenigstens einem Reaktivverdünner in einem Anteil von 0 bis 25 Gew.-%;
einem organischen Peroxid in einem Anteil von 0,5 bis 5 Gew.-%;
einem Beschleuniger in einem Anteil von 0 bis 1,0 Gew.-%;
einem Polymerisationsinhibitor in einem Anteil von 0 bis 0,2 Gew.-%;
wenigstens einem anorganischen Zusatzstoff in einem Anteil von 70 bis 85 Gew.-%; und
Wasser in einem Anteil von 1 bis 10 Gew.-%;
wobei die Summe aller Anteile 100 Gewichtsprozent ergibt.

13. Mörtelmasse nach einem der vorangehenden Ansprüche, **dadurch gekennzeichnet, dass** die Masse in einer Patrone, einer Kartusche oder einem Folienbeutel vorliegt, wobei die Harzkomponente (A) und die Härterkomponente (B) in voneinander getrennten Kammern angeordnet sind.

14. Verwendung der Zweikomponenten-Mörtelmasse gemäß einem der vorhergehenden Ansprüche zur chemischen Befestigung von Bauteilen wie Ankergewindestangen, Bewehrungseisen, Gewindehülsen und Schrauben, in Bohrlöchern, die in einem mineralischen Untergrund vorliegen.
